# EUROPÄISCHE PATENTSCHRIFT

(11) **EP 3 922 422 B1**
(45) Veröffentlichungstag und Bekanntmachung des Hinweises auf die Patenterteilung: **02.08.2023**
(21) Anmeldenummer: 21169723.0
(22) Anmeldetag: 21.04.2021
(51) Int. Cl.: B27C 5/06, B27D 5/00, B27M 1/08, B23D 47/04, B27B 5/06

(54) **VERFAHREN ZUM VERARBEITEN PLATTENFÖRMIGER WERKSTÜCKE**
METHOD FOR PROCESSING PLATE-SHAPED WORKPIECES
PROCÉDÉ D'USINAGE DE PIÈCES EN FORME DE PLAQUE

(30) Priorität: 09.06.2020 DE 102020115230
(43) Veröffentlichungstag der Anmeldung: 15.12.2021
(73) Patentinhaber: IMA Schelling Deutschland GmbH, 32312 Lübbecke (DE)
(72) Erfinder: Schürmann, Ralf, 32351 Stemwede (DE)
(74) Vertreter: Schober, Mirko

(56) Entgegenhaltungen:
- EP-A1- 3 081 343
- EP-A2- 1 369 215
- WO-A1-2016/087172
- DE-A1- 19 846 819
- DE-A1-102018 131 527

## Beschreibung

Die Erfindung betrifft ein Verfahren zum Verarbeiten plattenförmiger Werkstücke nach dem Oberbegriff des Anspruchs 1. Ein solches Verfahren ist aus dem Dokument EP1369215 A2 bekannt.

AT 500 768 A1 offenbart eine Bearbeitungsmaschine mit verschiedenen Aggregaten zum Sägen, Fräsen oder Bohren. Die Werkstücke werden dabei mittels Anschlägen ausgerichtet und die Bearbeitungsmaschinen entsprechend positioniert.

Da auf derartigen Anlagen verschiedene, gerade nicht verwendete Bearbeitungsaggregate ungenutzt sind, ist man dazu übergegangen, das Vereinzeln und die Nachbearbeitung räumlich zu trennen. Bei bekannten Verfahren dieser Art werden plattenförmige Werkstücke üblicherweise zu Beginn der Produktion als großformatige Platte bereitgestellt. Die genannte großformatige Platte ist entsprechend einem Zuschnittplan in einer Vereinzelungsstation zu vereinzeln. Die vereinzelten Platten werden dann aus der Vereinzelungsstation ausgeschleust und nachgeschalteten Bearbeitungseinheiten übergeben.

DE 10 2008 032 160 A1 offenbart ein Verfahren zur Plattenaufteilung, bei dem Markierungen eingebracht werden, ein Trennschnitt erfolgt und die abgetrennten Werkstücke zur weiteren Trennung ausgegeben werden, wo sie händisch um 90° gedreht und zum weiteren Zuschnitt wieder in die Maschine zurückgegeben werden. Dort werden sie ausgerichtet, endgültig zugeschnitten und wieder ausgegeben, wo sie händisch abgelegt werden.

DE 10 2014 204 695 A1 offenbart ein Bilderfassungsverfahren für eine Vereinzelungs/Bearbeitungsmaschine, wobei die Bilderfassung die Größe und den Bearbeitungszustand erfasst und daraus Abstapelungsvorschriften für eine händische Abstapelung zur Weiterverarbeitung erteilt. DE 10 2016 203 674 A1 offenbart ein Werkstückerfassungssystem, das für den Bediener Anweisungen zur weiteren Behandlung ermittelt.

DE 10 2005 004 578 A1 beschreibt ein Verfahren zum Betrieb einer Holzverarbeitungsmaschine, welches darauf abzielt, Werkstücke bearbeiten zu können, deren Bearbeitung ein Umspannen erfordert. Dazu weist eine entsprechende Bearbeitungsmaschine zwei Werkstücktische auf, die beide bei der Bearbeitung genutzt werden können.

DE 10 2006 027 013 B3 beschreibt eine Maschine zum Formatieren von Platten, mit deren Hilfe die kontinuierliche Fertigung von formatierten Platten erreicht werden kann, auch wenn die Platten ein unterschiedliches Format aufweisen. Dazu wird zur Formatierung der Plattenrohlinge eine Portalmaschine eingesetzt, welche die Möglichkeit einer Doppelplatzbelegung aufweist. Zwei Plattenfördervorrichtungen in Gestalt von parallelen Förderbahnen dienen dazu, die Platten zu transportieren. Auf diese Weise lässt sich die Ausrichtung von Rohplatten auf zwei Ausrichtplätzen vornehmen, was Zeit einspart.

Aus DE 20 2009 002 435 U1 ist eine Vorrichtung zur Bearbeitung von plattenförmigen Werkstücken bekannt, mit deren Hilfe eine schnelle und genaue Bearbeitung plattenförmiger Werkstücke auch mit komplexen Bearbeitungsaufgaben möglich ist. Dazu weist das verwendete Bearbeitungsaggregat eine um eine Vertikalachse schwenkbare Kreissäge auf, wobei eine Positioniereinrichtung für das Werkstück zur Positionierung mehrerer Werkstücke mehrere voneinander getrennt betätigbare Greifer aufweist. Auf diese Weise lassen sich mehrere Werkstücke über das Bearbeitungsaggregat bearbeiten.

Aus DE 10 2018 131 527 A1 ist ein Verfahren zum Verarbeiten plattenförmiger Werkstücke bekannt, mit dessen Hilfe sich die Prozessgeschwindigkeit insbesondere bei der Losgröße 1 Fertigung erhöhen lässt. Dazu wird bereits während des Vereinzelungsprozesses einer großformatigen Platte bereits - soweit möglich - ein Fertigbearbeitungsschritt ausgeführt. So können Bearbeitungsschritte, die eigentlich nach dem Vereinzeln von einem nachfolgenden Bearbeitungsaggregat durchgeführt werden müssten, bereits beim Vereinzeln erfolgen. Das nachgeschaltete Bearbeitungsaggregat wird dadurch entlastet, weswegen der Prozess insgesamt beschleunigt werden kann.

Aus EP 1 369 215 A2, WO 2016/087172, EP 3 081 343 und DE 198 46 819 A1 sind weitere Verfahren ähnlich denen im Oberbegriff des Anspruchs 1 bekannt.

Im Zuge der steigenden Automatisierung sowie den steigenden Ansprüchen hinsichtlich einer Fertigung in Losgröße 1 steigen auch die Anforderungen an die Prozessgeschwindigkeit stetig. Problematisch an bekannten Vereinzelungsstationen ist, wie es DE 10 2017 002 271 A1 offenbart, dass das fragliche Bauteil bei der Übergabe an eine nachgeschaltete Bearbeitungsstation im Grunde neu ausgerichtet und gegebenenfalls in einer definierten Ausrichtung aufgespannt werden muss. Die nachgeschaltete Bearbeitungsstation muss also bei der Übernahme des vereinzelten Werkstücks dieses erst ausrichten, um es nach Plan bearbeiten zu können.

Dieser Schritt beansprucht natürlich Zeit, was die Prozessgeschwindigkeit reduziert, da die Zeit, die ein Werkstück vom Herausschneiden aus der großformatigen Platte bis zu seiner Kommissionierung in einer entsprechenden Holzverarbeitungsanlage unterwegs ist, für die Prozessgeschwindigkeit ausschlaggebend ist.

Der Erfindung liegt daher die Aufgabe zugrunde, ein Verfahren zum Verarbeiten plattenförmiger Werkstücke anzugeben, mit dessen Hilfe sich die oben geschilderten Nachteile minimieren lassen, insbesondere die Prozessgeschwindigkeit erhöht und die Fertigung von Losgröße 1 durch Verbesserung des Materialflusses begünstigt wird.

Gelöst wird diese Aufgabe durch ein Verfahren mit den Merkmalen des Anspruchs 1. Vorteilhafte Ausführungsformen finden sich in den abhängigen Ansprüchen.

Beim erfindungsgemäßen Verfahren zum Verarbeiten plattenförmiger Werkstücke, insbesondere aus Holz oder Holzersatzstoffen, werden folgende Schritte ausgeführt:
a. Bereitstellen einer großformatigen Platte, insbesondere aus Holz oder Holzersatzstoffen, und Zuführen der großformatigen Platte zu einer Vereinzelungsstation,
b. Vereinzeln von plattenförmigen Werkstücken durch Aufteilen der bereitgestellten großformatigen Platte in der Vereinzelungsstation, indem dort durch wenigstens ein Vereinzelungsaggregat Schnitte in der großformatigen Platte ausgeführt werden,
c. Zuführen der so vereinzelten Werkstücke an wenigstens eine nachgelagerte Bearbeitungsstation, um das plattenförmige Werkstück fertigzustellen.

Erfindungsgemäß erhält dabei in Schritt b. von dem Vereinzelungsaggregat wenigstens ein Teil jedes vereinzelten Werkstücks einen Ausrichtabschnitt zum Angreifen von Greifelementen und/oder Einbringen von Referenzbohrungen, wobei das mit dem Ausrichtabschnitt versehene Werkstück nach dessen Vereinzelung mittels eines am Ausrichtabschnitt angreifenden Greifelement, Eingriffselement oder Erfassungselement übernommen wird. Ein Greifelement im Sinne der Erfindung ist nicht nur ein Greifer, sondern jedes Element, was in der Lage ist, zumindest formschlüssig mit dem Ausrichtabschnitt in Eingriff gebracht zu werden. Ein Greifelement ist also auch ein Eingriffselement oder Erfassungselement. Das erfindungsgemäße Greifelement, Eingriffselement oder Erfassungselement kann also auch ein Element sein, was lediglich dazu ausgerichtet ist, das fragliche plattenförmige Werkstück, an welchem sich der Ausrichtabschnitt befindet, mitzuziehen. Das am Ausrichtabschnitt des Werkstücks formschlüssig angreifende Greifelement, Eingriffselement oder Erfassungselement durchläuft erfindungsgemäß nach der Übernahme einen Rückführkreislauf.

Sofern also im Folgenden lediglich von einem Greifelement die Rede ist, gelten die Ausführungen sinngemäß auch für ein Eingriffselement oder Erfassungselement. Wichtig ist, dass das genannte Element zumindest formschlüssig mit dem Ausrichtabschnitt des Werkstücks zusammenwirkt.

Durch den erfindungsgemäßen Kreislauf wird zum einen ermöglicht, dass das formschlüssig angreifende Greifelement, Eingriffselement oder Erfassungselement wieder zum Übergabepunkt, an welchem ein neues Werkstück aufgenommen werden kann, zurückgeführt werden kann. Weiter kann natürlich vorgesehen sein, dass auch der Kreislauf eine oder eine Mehrzahl Bearbeitungsstation(en) aufweist, um das durch den Kreislauf geführte Werkstück zu bearbeiten. Das Werkstück kann an einer beliebigen Stelle aus dem Kreislauf ausgeschleust werden oder den gesamten Kreislauf durchlaufen. Letzteres kann dann vorteilhaft sein, wenn beispielsweise noch nachgeschaltete Bearbeitungsschritte erforderlich sein sollten, die sich im Kreislauf nicht unterbringen lassen. Der formschlüssige Angriff des Greifelements, Eingriffselements oder Erfassungselements am Werkstück hat vor allem bei beabsichtigter Kreislaufführung den Vorteil, dass das Werkstück gedreht werden kann, ohne dass es dazu neu auszuspannen oder in irgendeiner Form zu übergeben wäre.

Plattenförmige Werkstücke im Sinne dieser Erfindung können Werkstücke aus Holz oder Holzersatzstoffen sein, aber auch Leichtbauplatten, Gipskartonplatten, Faserzementplatten oder allgemein Platten aus anderen Materialien, sowie Platten sein, die insbesondere für den Automobilausbau oder allgemein für die Verwendung als Bauelemente für andere Konstruktionen eingesetzt werden können.

Der Grundgedanke der Erfindung liegt darin, bereits während des Vereinzelungsprozesses dafür zu sorgen, dass das später aus der großformatigen Platte herausgetrennte Werkstück bereits eine Referenz zum Ausrichten des Werkstücks im Folgeprozess erhält. Bei so einer Referenz kann es sich zum Beispiel um einen Ausrichtabschnitt, d. h. ein über das später zu erstellende Fertigformat des herausgetrennten Werkstücks hinausstehenden Abschnitt und/oder um eine wie auch immer gestaltete eingebrachte Referenz, zum Beispiel eine Bohrung oder dergleichen, die mit einem Aggregat in das Werkstück bzw. einen stehengelassenen Randbereich eingebracht wird, handeln.

Damit die vereinzelten Werkstücke nach dem Vereinzeln nicht unkontrolliert, insbesondere in Ihrer Ausrichtung nicht definierten Lage weitertransportiert werden, werden die mit dem Ausrichtabschnitt versehenen Werkstücke nach deren Vereinzelung von einem am Ausrichtabschnitt angreifenden Greifelement übernommen. Das Greifelement übernimmt dabei die Ausrichtung des Werkstücks, wobei es bevorzugt formschlüssig am Ausrichtabschnitt angreift und das Werkstück kontrolliert, und dieses dabei bevorzugt ausgerichtet zu der wenigstens einen nachgelagerten Bearbeitungsstation weitertransportiert.

Da erfindungsgemäß also ein Schritt oder Teilschritt zum Ausrichten des Werkstücks bereits beim Vereinzelungsprozess ausgeführt wird, braucht dieser im nachgeschalteten Bearbeitungsaggregat nicht mehr durchgeführt zu werden, was die Prozesszeit deutlich reduziert und insbesondere bei Losgröße 1 zu einer deutlichen Beschleunigung des Verfahrens beitragen kann.

Wird der Ausrichtabschnitt nicht mehr benötigt, wenn beispielsweise das Werkstück bei der Fertigbearbeitung entsprechend in einer der Vereinzelungsstation nachgeschalteten Bearbeitungsstation ausgerichtet ist, wird der Ausrichtabschnitt in oder nach Schritt c. durch einen Fertigschnitt oder jedenfalls durch einen Trennschnitt entfernt. Nach einer bevorzugten Ausführungsform der vorliegenden Erfindung ist vorgesehen, dass der Ausrichtabschnitt in der wenigstens einen nachgelagerten Bearbeitungsstation, insbesondere im letzten Bearbeitungsschritt, entfernt wird.

In einem bevorzugten Verfahren umfasst das Greifelement einen Greifer, der am Ausrichtabschnitt angreift. Alternativ oder ergänzend hierzu kann das Greifelement ein Zentrier- oder Ausrichtelement aufweisen. Dabei handelt es sich bevorzugt um einen Dorn, Bolzen oder Stift. Für dieses Greifelement wird dann in Schritt b. oder davor oder danach eine Referenzbohrung in den Ausrichtabschnitt eingebracht, in welche dann das genannte Zentrier- oder Ausrichtelement eingreift.

Sind die genannten Referenzbohrungen, bevorzugt in Schritt b, eingebracht worden, können sie zum Zentrieren und Ausrichten verwandt werden. Hierzu kann das Greifelement mit Zentrier- oder Ausrichtelementen ausgestattet werden, die in die entsprechenden Referenzbohrungen greifen. Mit der Kenntnis der Position und Ausrichtung der Greifelemente kann die Position und Ausrichtung der Werkstücke berechnet werden. Diese Art der Ausrichtung kann ergänzend zum Greifen der Werkstücke angewendet oder sogar als alleinige Ausrichtvorrichtung eingesetzt werden. Mit klar definierten Referenzpunkten erfolgt eine Ausrichtung einfach und präzise.

Beim erfindungsgemäßen Verfahren kann die Prozesszeit noch weiter verkürzt werden, wenn weitere Verfahrensschritte bei der Herstellung eines Fertigteils bereits im Vereinzelungsprozess ausgeführt werden. Dazu kann nach einer erfindungsgemäßen Verfahrensvariante vorgesehen sein, dass in Schritt b von dem Vereinzelungsaggregat wenigstens ein Fertigschnitt ausgeführt wird, wobei der Ausrichtabschnitt an einem fertigschnittfreien Teil des jeweiligen vereinzelten Werkstücks vorgesehen wird. Natürlich können auch mehrere Fertigschnitte vorgesehen werden, je nachdem, welche Geometrie das herausgetrennte Teil später haben soll. Durch Ausführen von Fertigschnitten brauchen diese bei der späteren Bearbeitung nicht durchgeführt werden und sparen weitere Prozesszeit, weil Fertigschnitte bereits von der Vereinzelungsstation ausgeführt werden.

Zur weiteren oder alternativen Prozessoptimierung kann auch vorgesehen sein, dass Vereinzelungsaggregate dazu ausgebildet sind, neben dem Vereinzeln des Werkstücks an diesem Zusatzbearbeitungsschritte, insbesondere Fälzungen, Nuten, Bohrungen oder/und Ausnehmungen in das Werkstück einzubringen. So können Bearbeitungsschritte, die normalerweise von nachgeschalteten Bearbeitungsstationen ausgeführt werden müssen, in die Vereinzelungsstation vorverlagert werden.

Bevorzugt umfasst das wenigstens eine Vereinzelungsaggregat der Vereinzelungsstation wenigstens ein Fräsaggregat und/oder ein Sägeaggregat. Andere Aggregate können - wie oben angedeutet - ebenfalls in der Vereinzelungsstation vorgesehen sein.

Bevorzugt umfasst die Vereinzelungsstation einen Bearbeitungstisch, wobei das Vereinzelungsaggregat daran in einer ersten Richtung, insbesondere an einem Portal, verschieblich gelagert ist. Es muss nicht zwingend ein Portal verwendet werden, die entsprechenden Verschiebeeinrichtungen können auch beispielsweise unterhalb der Bearbeitungstischfläche verschieblich gelagert sein.

Dabei kann vorgesehen sein, dass das wenigstens eine Vereinzelungsaggregat in einer, insbesondere zur ersten Richtung senkrecht verlaufenden, zweiten Richtung verschieblich ist. So kann die Zerteilung der großformatigen Platte durch eine Kombination der Bewegung des Vereinzelungsaggregat und der Platte selbst erfolgen.

Allgemein kann vorgesehen sein, dass das Herausteilen eines plattenförmigen Werkstücks aus der großformatigen Platte durchgeführt wird, indem das Vereinzelungsaggregat mit der großformatigen Platte in Eingriff gebracht und die großformatige Platte in der ersten Richtung und/oder das Vereinzelungsaggregat in der zweiten Richtung bewegt werden.

Wenn erst einmal die Vereinzelung an der Vereinzelungsstation durchgeführt worden ist, kann gemäß dem erfindungsgemäßen Verfahren eine nachgeschaltete Bearbeitungsstation mit dem vereinzelten Werkstück beschickt werden. Dazu sieht das erfindungsgemäße Verfahren nach einer bevorzugten Ausführungsform vor, dass an der wenigstens einen nachgelagerten Bearbeitungsstation wenigstens einer der folgenden Bearbeitungsgänge durchgeführt wird:
i) Aufnehmen und Ausrichten eines vereinzelten Werkstücks am Ausrichtabschnitt
ii) Beschichten einer Schmalseite des plattenförmigen Werkstücks mit einem Kantenstreifen,
iii) Durchführen eines Fertigschnitts, an einer noch nicht fertig formatierten Schmalseite des plattenförmigen Werkstücks,
iv) Einbringen von wenigstens einer Bohrung in das plattenförmige Werkstück,
v) Fertigbearbeiten des mit einem Kantenstreifen versehenen Werkstücks.

Die oben genannte Aufzählung ist nicht abschließend, natürlich können auch noch andere Bearbeitungsschritte an einer oder einer Mehrzahl von der Vereinzelungsstation nachgeschalteten Bearbeitungsstationen durchgeführt werden.

Grundsätzlich können die nachgeschalteten Bearbeitungsstationen daher ganz unterschiedliche Tätigkeiten ausführen. Insbesondere aber nicht ausschließlich im Hinblick auf den hiesigen Anwendungsfall der Holzverarbeitung hat sich als bevorzugt herausgestellt, wenn als wenigstens eine nachgelagerte Bearbeitungsstation ein Bearbeitungszentrum und/oder eine Durchlaufmaschine und/ oder eine Bohrmaschine eingesetzt wird.

Sofern die Vereinzelungsstation Fertigschnitte durchführen sollte, kann nach einer besonderen Verfahrensvariante außerdem vorgesehen sein, dass in Schritt b. im Bereich der Fertigschnitte entstehender Verschnitt vor oder während des Schritts c. ausgesondert wird. Dies ermöglicht insbesondere, störende Verschnittteile bereits vor der Übergabe an eine der Vereinzelungsstation nachgelagerte Bearbeitungsstation zu entsorgen und so jedenfalls die Materialflussmenge zu minimieren.

Je nach Tätigkeiten, die die Vereinzelungsstation ausführt, d.h., welcher Gestalt der Ausrichtabschnitt auch immer sein sollte, kann der Ausrichtabschnitt eines in Schritt b. vereinzelten plattenförmigen Werkstücks im weiteren Bearbeitungsprozess zum Ausrichten des betreffenden Werkstücks eingesetzt werden.

Die Erfindung wird nun nachfolgend anhand der Figuren 1 bis 4H näher erläutert.
Figur 1A zeigt eine Draufsicht auf eine beispielhafte Vorrichtung mit angeschlossenem Kreislauf zur Durchführung des erfindungsgemäßen Verfahrens.
Figur 1B zeigt eine Draufsicht auf einen Teil einer erfindungsgemäßen Vorrichtung mit weiteren Bearbeitungsstationen.
Figur 2A zeigt eine Draufsicht auf ein beispielhaftes, in der Vereinzelungsstation vereinzeltes Werkstück mit Ausrichtabschnitt in einer ersten Ausführungsform.
Figur 2B zeigt eine Draufsicht auf ein beispielhaftes, in der Vereinzelungsstation vereinzeltes Werkstück mit Ausrichtabschnitt in einer zweiten Ausführungsform.
Figur 2C zeigt eine Draufsicht auf ein beispielhaftes, in der Vereinzelungsstation vereinzeltes Werkstück mit Ausrichtabschnitt in einer dritten Ausführungsform.
Figur 2D zeigt eine Draufsicht auf ein beispielhaftes, in der Vereinzelungsstation vereinzeltes Werkstück mit Ausrichtabschnitt in einer vierten Ausführungsform.
Figur 3A zeigt eine Draufsicht auf ein beispielhaftes, in der Vereinzelungsstation vereinzeltes Werkstück mit Ausrichtabschnitt in einer fünften Ausführungsform in perspektivischer Darstellung.
Figur 3B zeigt eine perspektivische Darstellung des Werkstücks aus Figur 3A, welches von einem formschlüssig angreifenden Greifelement, Eingriffselement oder Erfassungselement erfasst ist.
Figur 3C zeigt die Situation von Fig. 3B in Draufsicht.
Figur 3D zeigt die Situation von Fig. 3B als Schnittansicht.
Figur 4A zeigt eine Ausschnittvergrößerung des Ausschnitts A aus Figur 1B.
Figur 4B zeigt eine Ausschnittvergrößerung des Ausschnitts B aus Figur 1B.
Figur 4C zeigt eine Ausschnittvergrößerung des Ausschnitts C aus Figur 1B.
Figur 4D zeigt eine Ausschnittvergrößerung des Ausschnitts D aus Figur 1B.
Figur 4E zeigt eine Ausschnittvergrößerung des Ausschnitts E aus Figur 1B.
Figur 4F zeigt eine Ausschnittvergrößerung des Ausschnitts F aus Figur 1B.
Figur 4G zeigt eine Ausschnittvergrößerung des Ausschnitts G aus Figur 1.
Figur 4H zeigt eine Ausschnittvergrößerung des Ausschnitts H aus Figur 1B.

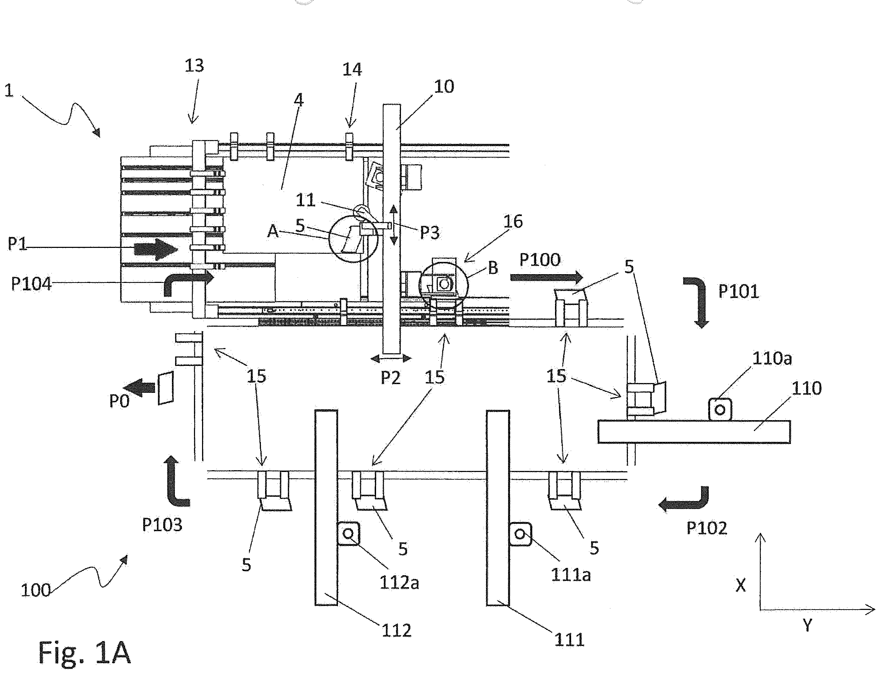

In Figur 1A ist eine Übersichtsdarstellung über eine mögliche Vorrichtung abgebildet, mit deren Hilfe das erfindungsgemäße Verfahren durchgeführt werden kann. Viele andere Vorrichtungen sind ebenfalls denkbar.

Die folgende Schilderung einzelner Komponenten der in Figur 1A abgebildeten Vorrichtung ist daher rein beispielhaft und die beschriebenen Komponenten sind im Hinblick auf das erfindungsgemäße Verfahren optional.

Lediglich zwingend verlangt das erfindungsgemäße Verfahren, dass einerseits eine Vereinzelungsstation 1 vorgesehen ist, die die Vereinzelung von großformatigen Platten 4 in einzelne vereinzelte Werkstücke 5 bewirkt, sowie andererseits wenigstens eine der Vereinzelungsstation 1 nachgelagerte Bearbeitungsstation 16, 2, 3 vorhanden ist, an der das vereinzelte Werkstück 5 in irgendeiner Form gehandelt oder anderweitig bearbeitet wird. Bei den plattenförmigen Werkstücken im Sinne der Erfindung handelt es sich vorzugsweise um solche aus Holz oder Holzersatzstoffen. Andere Materialien sind grundsätzlich denkbar.

Im gezeigten Beispiel weist die Vereinzelungsstation 1 ein Portal 10 auf, an welchem ein Bearbeitungsaggregat 11 in Richtung X (Richtung des Pfeils P3) hin und her verschiebbar angeordnet ist. Das Portal 10 selbst ist senkrecht zu seiner Erstreckungsrichtung bevorzugt unbeweglich, kann aber auch in Richtung Y verschieblich ausgeführt sein. Das Bearbeitungsaggregat 11 muss allerdings nicht zwingend an einem Portal 10 angebracht sein, es kann auch auf andere Weise an der Vereinzelungsstation 1 relativ zum Ablagetisch 12 der Vereinzelungsstation 1 beweglich angeordnet sein.

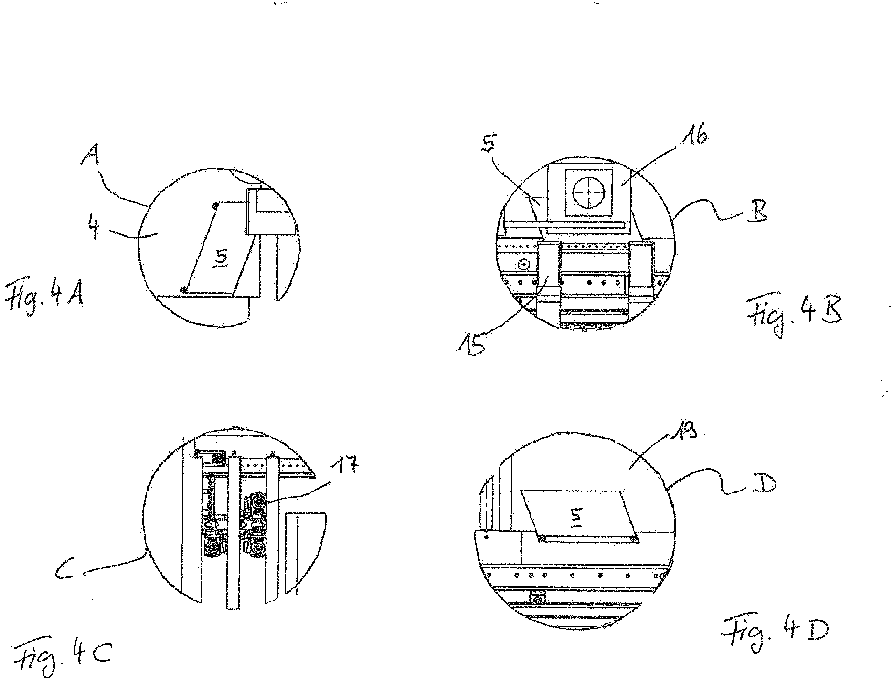

Die großformatige Platte 4 wird bevorzugt in Richtung des Pfeils P1 (parallel zur Richtung Y) auf die Ablagefläche des Ablagetisches 12 geschoben und dort von bezüglich der Richtung Y an die Querseite der großformatigen Platte 4 angreifenden Greifern 13 und/oder an bzgl. der Richtung Y an die Längsseite der großformatigen Platte 4 angreifenden Greifern 14 erfasst und fixiert. Bevorzugt sind die Greifer 13, 14 in Richtung Y verschieblich. Zum Vereinzeln führt das Bearbeitungsaggregat 11, bei welchem es sich um eine Fräse oder Säge oder ein anderes Bearbeitungsaggregat handeln kann, unter anderem Schnitte durch, mit denen ein Werkstück 5 aus der großformatigen Platte herausgetrennt wird. Im gezeigten Beispiel geschieht dies bei A (Fig. 4A).

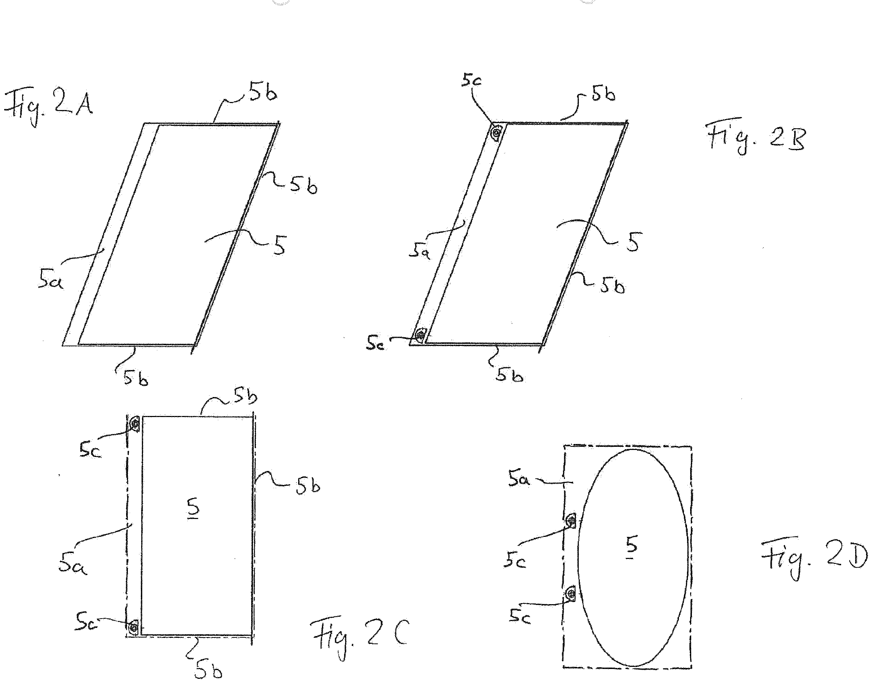

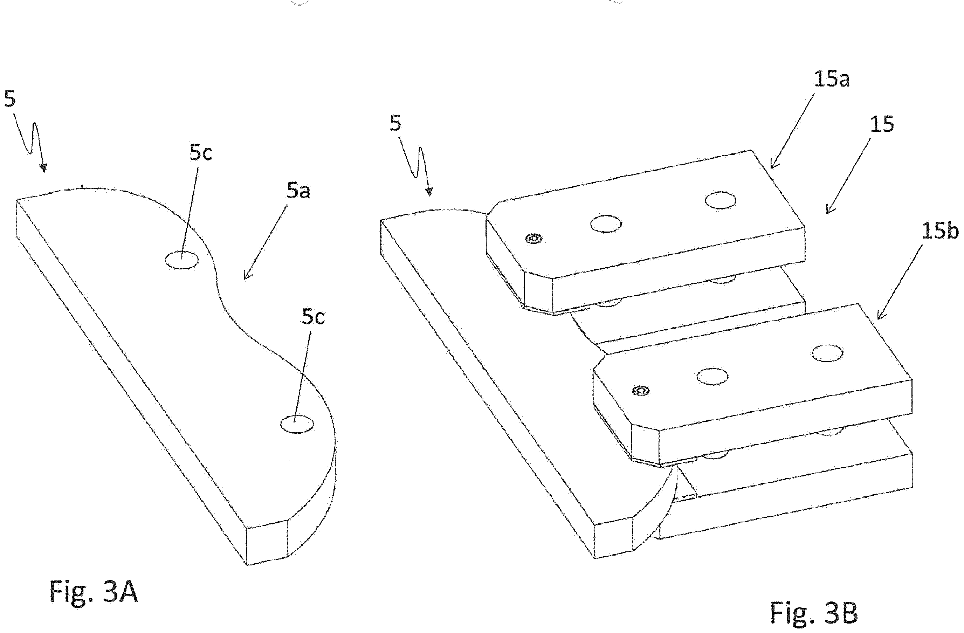

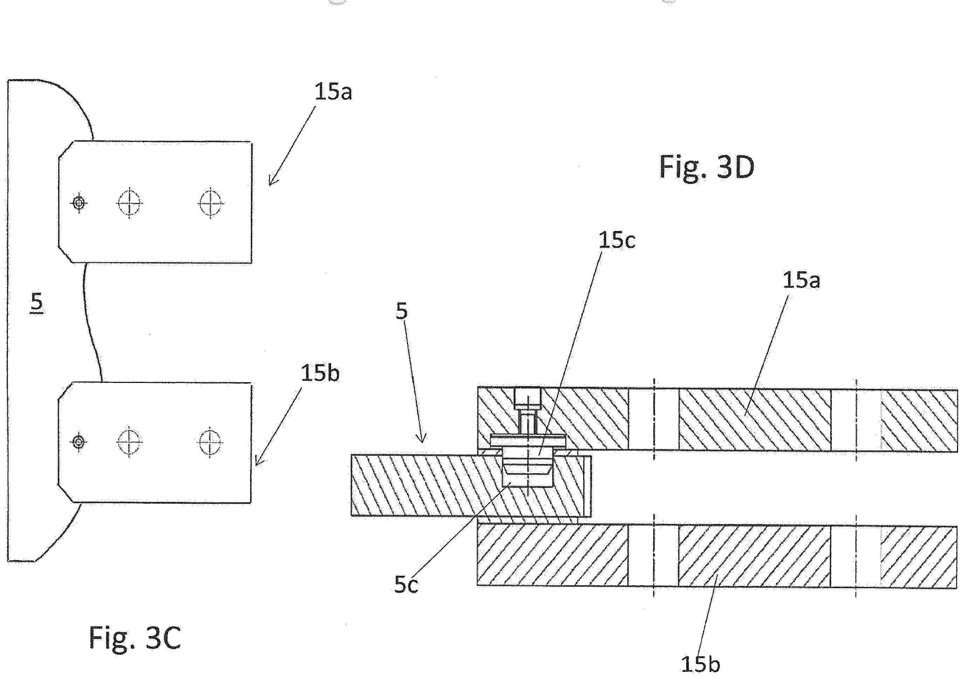

Wesentlich für die Ausführung des Erfindungsgedankens ist nun, dass das vereinzelte Werkstück 5 in der Vereinzelungsstation 1 einen Ausrichtabschnitt erhält. Was ein Ausrichtabschnitt sein kann, wird mit Bezug auf die Figuren 2A bis 2B sowie 3A bis 3D an den dortigen Beispielen erläutert.

Zum einen kann, wie in Figur 2A gezeigt, ein Ausrichtabschnitt beispielsweise ein Materialüberstand 5a sein, der anders als beispielsweise Fertigschnitte 5b, bei denen das vereinzelte Werkstück 5 bereits Endformat aufweist, in einem späteren Verfahrensschritt noch vom vereinzelten Werkstück 5 abgetrennt werden muss. Alternativ oder ergänzend ist es aber auch möglich, wie zum Beispiel in Figur 2B gezeigt, in welcher das Werkstück 5 wie auch in Figur 2A zum Beispiel eine Parallelogrammform aufweist, Ausrichtabschnitte 5c in das Werkstück 5 im Bereich der Vereinzelungsstation während des Vereinzelungsvorgangs einzubringen oder anzubringen. Im gezeigten Beispiel sind die Ausrichtabschnitte 5c beispielsweise durch Fräsen oder Bohren eingebrachte Vertiefungen, in die zum Beispiel entsprechende Zentrier- oder Ausrichtetelemente von das vereinzelte Werkstück 5 übernehmenden Greifeinrichtungen eingreifen können. Bevorzugt sind solche Vertiefungen nicht rotationssymmetrisch ausgebildet, sodass ein mehr oder weniger formschlüssiges Eingreifen der genannten Greifeinrichtungen in das übernommene Werkstück 5 erfolgen und die Greifeinrichtung dieses mit einer definierten Referenzposition übernehmen kann. Der Maschinensteuerung ist dann bekannt, wie genau das Werkstück 5 in der Maschine ausgerichtet ist.

Wie in den Figuren 2C und 2D gezeigt, lassen sich damit, insbesondere wenn man überstehende Abschnitte 5a und Vertiefungen 5c miteinander kombiniert, beliebige Formen (Rechteck in Figur 2C oder Oval in Figur 2D) nach dem Vereinzeln in der Vereinzelungsstation für weitere Bearbeitungsschritte an nachfolgende Bearbeitungsaggregate übergeben.

In Figur 3A sind die Ausrichtabschnitte 5c beispielsweise einfache Bohrungen, dies können zum Beispiel zylindrische Bohrungen, Durchgangsbohrungen oder Topfbohrungen sein, in die ein Ausrichtelement des Greifelements, Eingriffselements oder Erfassungselements 15 formschlüssig angreift, wie man in den Figuren 3B bis 3D erkennt. Das Element 15 greift im gezeigten Beispiel mit zwei Auslegern 15a und 15b, die jeweils ein Ausrichtelement 15c aufweisen, in den entsprechenden Ausrichtabschnitt 5c ein. Das Ausrichtelement 15c ist beispielsweise gut in der Figur 3D zu erkennen, wie es in den Ausrichtabschnitt 5c eintaucht. Im gezeigten Beispiel handelt es sich bei dem Ausrichtelement 15c um einen Stift oder Dorn, welcher formschlüssig in dem Ausrichtabschnitt 5c liegt. Auf diese Weise kann das Werkstück 5 von dem Element 15 mitgezogen und durch die weitere Vorrichtung transportiert werden.

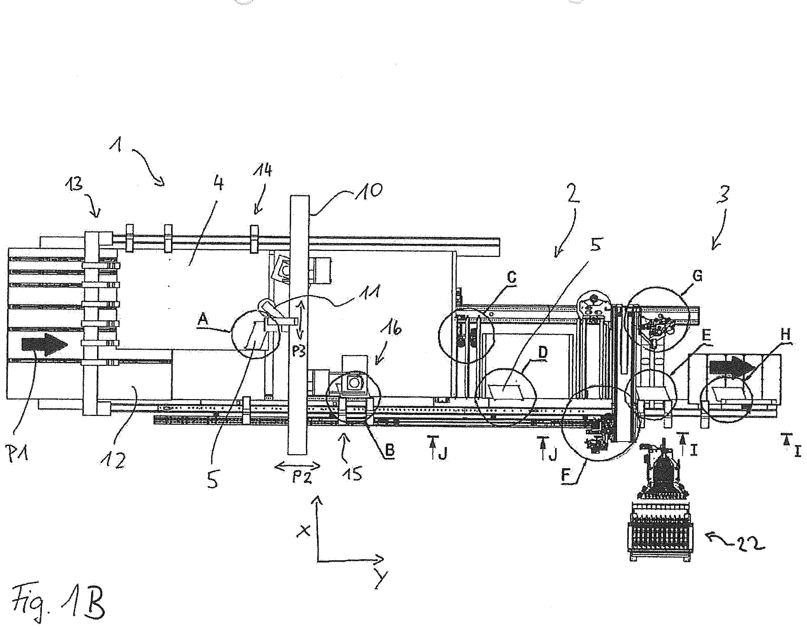

Eine entsprechende erste Übergabe ist beispielsweise im Abschnitt B der Figur 1A und 1B und der zugehörigen Figur 4B dargestellt. Identische Komponenten oder ähnliche Komponenten der Figuren 1A und 1B sind mit denselben Bezugszeichen bezeichnet. In den gezeigten Figuren wird im Abschnitt B das bereits vereinzelte Werkstück beispielsweise von einer Dreheinrichtung 16 aufgenommen und um 90° gedreht und sodann dem formschlüssig angreifenden Greifelement, Eingriffselement oder Erfassungselement 15 übergeben, welches bevorzugt zumindest zunächst in Richtung Y verschieblich ist und das Werkstück 5 an dem entsprechenden Ausrichtabschnitt übernehmen und gegebenenfalls durch die weitere Vorrichtung transportieren. Erfindungsgemäß wird das Element 15 dann den Kreislauf 100 durchlaufen, sodass es nach erfolgtem Durchlauf (Pfeile P100, P101, P102, P103, P104) das nächste Werkstück 5 im Abschnitt B aufnehmen kann.

In dem Kreislauf können eine oder eine Mehrzahl Bearbeitungsstationen 110, 111, 112 durchlaufen werden, die im gezeigten Beispiel als Portale mit den Bearbeitungsaggregaten 110a, 111a, 112a ausgebildet sind. Die Bearbeitungsstation(en) im Kreislauf 100 kann/können jedoch auch andere Bearbeitungsstationen sein, wie sie zum Beispiel in der Figur 1B abgebildet und anhand der Figuren 4A bis 4H näher erläutert sind. Das formschlüssige Angreifen des Elements 15 an dem entsprechenden Ausrichtabschnitt hat insbesondere den Vorteil, dass sich auf diese Weise das Werkstück sehr leicht durch den Kreislauf 100 führen und dort von allen Seiten bearbeiten lässt. Die Werkstücke können aus dem Kreislauf ausgeschleust werden (Pfeil P0) . Natürlich kann das Werkstück auch den Kreislauf 100 vollständig durchlaufen und beispielsweise an der Station B nicht erneut in den Kreislauf eingeschleust werden, sondern dort in Richtung Y (vgl. Figur 1B) geradeaus weitergeführt werden und weitere Stationen C bis H durchlaufen.

Ist das Werkstück vom Element 15 aufgenommen, weiß die Maschinensteuerung ab diesem Punkt genau, in welcher Ausrichtung das Werkstück 5 in der Maschine liegt und kann darauf basierend das weitere Bearbeitungsprogramm fahren. Anstelle der Einrichtungen 15, 16 kann in der entsprechenden Vorrichtung an dieser Stelle (B) auch ein Roboter eingesetzt werden, der einerseits das Werkstück in eine bestimmte Position dreht, andererseits das Werkstück 5 entsprechend am Ausrichtabschnitt 5a bzw. 5b greifen kann.

Eine Drehung ist natürlich optional. Die nachfolgenden Bearbeitungsschritte - ob sie nun im Kreislauf 100 oder an den Stationen C bis H erfolgen, können beliebig miteinander kombiniert oder es können einzelne Bearbeitungsschritte weggelassen werden. So kann beispielsweise bei C (entsprechend Figur 4C) eine Fräsbearbeitung oder Bohrbearbeitung mit einem entsprechenden Aggregat 17 (gegebenenfalls von der Unterseite des Werkstücks 5) vorgenommen werden, wobei die oben erwähnten Greifer 15 dazu verwendet werden können, dass Werkstück 5 während dieses Bearbeitungsschritts festzuhalten. Ebenso lässt sich dies durch einen in Y-Richtung mitfahrenden Roboter bewerkstelligen.

Bei Station D (Figur 4D) kann das Werkstück 5 beispielsweise auf einem Vakuumtisch 19 oder in einem Puffer platziert und gegebenenfalls durch eine weitere Gruppe von Greifern oder Spannern, die in Y-Richtung beweglich sind, übernommen werden. Gleichzeitig oder ergänzend kann an dieser Stelle die Übergabe des Werkstücks 5 an das Transport- oder ein Schutzsystem der nachfolgenden Bearbeitungsstation erfolgen.

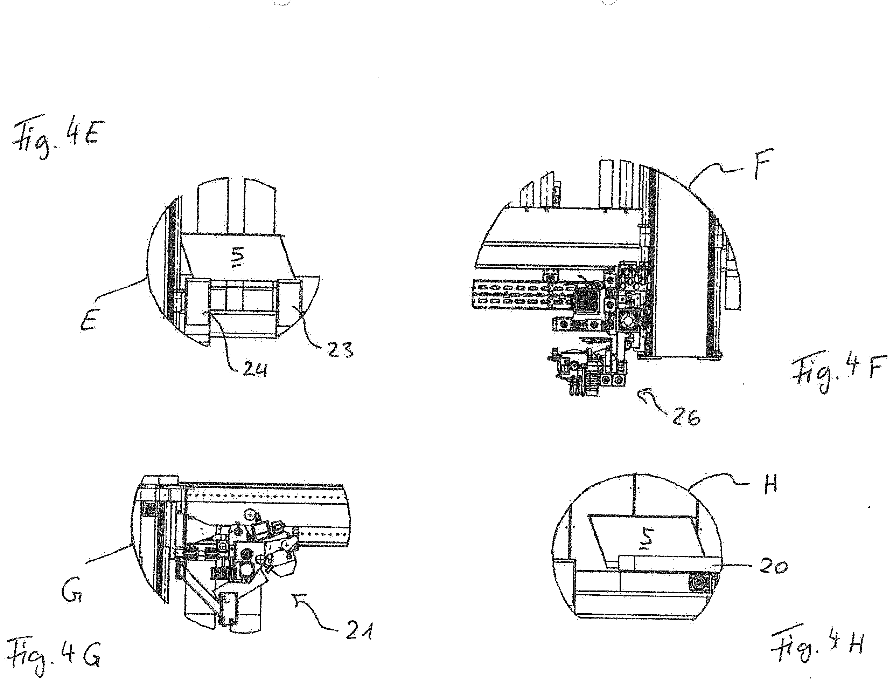

Dort kann beispielsweise optional bei F (Figur 4F) ein weiteres Bearbeitungsaggregat wie zum Beispiel ein Werkzeugwechsler oder ein Reihenbohrkopf 26 oder ein Verleimaggregat vorgesehen sein, welches Bearbeitungsschritte am Werkstück 5 ausführt.

Ebenso kann das Werkstück 5 bei Station E (Figur 4E) von entsprechenden Greifern oder Spannern 23, 24 gehalten und/oder in Richtung Y verschoben werden, wobei hier beispielsweise von der Oberseite des Werkstücks 5 her eine Nachbearbeitung vorgenommen werden kann.

Eine weitere optionale Station ist die Station G (Figur 4G). An dieser Stelle kann beispielsweise ein durch ein Kantenmagazin 22 gespeistes Verleimaggregat 21 oder Anbringaggregat angeordnet sein, welches zum Anbringen von Kantenbändern an die Schmalseite des Werkstücks 5 ausgebildet ist. Theoretisch kann hier die Anbringung an drei Werkstückschmalseiten erfolgen, nämlich überall dort, wo das Werkstück 5 nicht festgehalten wird.

Insbesondere können in den Stationen B bis F gegebenenfalls weitere Fertigschnitte am Werkstück 5 vorgenommen werden.

Bei der in Figur 4H näher gezeigten Station H (also bevorzugt zum Ende der Bearbeitung) kann dann der Ausrichtabschnitt 5a entfernt und das Werkstück am Ende zum Abtransport fertiggestellt werden. Dazu kann eine Säge oder eine Fräse an dieser Stelle vorgesehen sein.

Natürlich können die Stationen zwei und drei sowohl Durchlaufmaschine als auch Bearbeitungszentren beinhalten oder als solche ausgebildet sein.

Mit der erfindungsgemäßen Anordnung lassen sich Verarbeitungsprozesse optimieren, weil Hilfsmaßnahmen zur späteren Ausrichtung und Referenzierung des aus der großformatigen Platte 4 vereinzelten Werkstücks 5 bereits vor der eigentlichen Bearbeitung durchgeführt werden können, sodass entsprechende Rüstzeiten bei der eigentlichen Werkstückbearbeitung vermieden werden können.

## Patentansprüche

1. Verfahren zum Verarbeiten plattenförmiger Werkstücke (4, 5), insbesondere aus Holz oder Holzersatzstoffen, bei welchem folgende Schritte ausgeführt werden:
a. Bereitstellen einer großformatigen Platte (4), insbesondere aus Holz oder Holzersatzstoffen, und Zuführen (P1) der großformatigen Platte (4) zu einer Vereinzelungsstation (1),
b. Vereinzeln von plattenförmigen Werkstücken (5) durch Aufteilen der bereitgestellten großformatigen Platte (4) in der Vereinzelungsstation (1), indem dort durch wenigstens ein Vereinzelungsaggregat (11) Schnitte in der großformatigen Platte (4) ausgeführt werden,
c. Zuführen der so vereinzelten Werkstücke (5) an wenigstens eine nachgelagerte Bearbeitungsstation (2, 3; 110, 111, 112), um das plattenförmige Werkstück (5) fertigzustellen,
wobei in Schritt b. von dem Vereinzelungsaggregat (11) wenigstens ein Teil jedes vereinzelten Werkstücks einen Ausrichtabschnitt (5a) zum Angreifen von Greifelementen (14, 15) und/oder Einbringen von Referenzbohrungen erhält, wobei der Ausrichtabschnitt (5a) ein über das später zu erstellende Fertigformat des herausgetrennten Werkstücks hinausstehender Abschnitt ist, wobei das mit dem Ausrichtabschnitt (5a) versehene Werkstück (5) nach dessen Vereinzelung mittels eines am Ausrichtabschnitt (5a) formschlüssig angreifenden Greifelements (14, 15), Eingriffselements oder Erfassungselements übernommen wird, wobei das am Ausrichtabschnitt (5a) des Werkstücks (5) formschlüssig angreifende Greifelement, Eingriffselement oder Erfassungselement (15) nach der Übernahme einen Kreislauf (100) durchläuft,
**dadurch gekennzeichnet,**
**dass** der Ausrichtabschnitt (5a) in oder nach Schritt c. durch einen Fertigschnitt oder Trennschnitt entfernt wird.

2. Verfahren nach Anspruch 1,
**dadurch gekennzeichnet,**
**dass** das Greifelement (14, 15), Eingriffselement oder Erfassungselement einen Greifer umfasst, der am Ausrichtabschnitt (5a) angreift und/oder das Greifelement, Eingriffselement oder Erfassungselement ein Zentrier- oder Ausrichtelement (15c), bevorzugt einen Dorn, Bolzen oder Stift aufweist, wobei in Schritt b. eine Referenzbohrung (5c) in den Ausrichtabschnitt (5a) eingebracht wird, in welche dann das Zentrier- oder Ausrichtelement (15c) eingreift.

3. Verfahren nach Anspruch 1 oder 2,
**dadurch gekennzeichnet,**
**dass** in Schritt b. von dem Vereinzelungsaggregat (11) wenigstens ein Fertigschnitt (5b) ausgeführt wird,
wobei der Ausrichtabschnitt (5a) an einem fertigschnittfreien Teil des jeweiligen vereinzelten Werkstücks vorgesehen wird.

4. Verfahren nach einem der vorigen Ansprüche,
**dadurch gekennzeichnet,**
**dass** das Vereinzelungsaggregat (11) dazu ausgebildet ist, neben dem Vereinzeln des Werkstücks an diesem Zusatzbearbeitungsschritte, insbesondere Fälzungen, Nuten, Bohrungen oder/und Ausnehmungen in das Werkstück einzubringen.

5. Verfahren nach einem der vorigen Ansprüche,
**dadurch gekennzeichnet,**
**dass** das wenigstens eine Vereinzelungsaggregat (11) wenigstens ein Fräsaggregat und/oder ein Sägeaggregat umfasst.

6. Verfahren nach einem der vorigen Ansprüche,
**dadurch gekennzeichnet,**
**dass** die Vereinzelungsstation (1) einen Bearbeitungstisch (12) umfasst, wobei das Vereinzelungsaggregat (11) daran in einer ersten Richtung (X, Y), insbesondere an einem Portal (10), verschieblich gelagert ist.

7. Verfahren nach Anspruch 5 oder 6,
**dadurch gekennzeichnet,**
**dass** das wenigstens eine Vereinzelungsaggregat (11) in einer, insbesondere zur ersten Richtung (Y) senkrecht verlaufenden, zweiten Richtung (X) verschieblich ist.

8. Verfahren nach Anspruch 5, 6 oder7,
**dadurch gekennzeichnet,**
**dass** das Herausteilen eines plattenförmigen Werkstücks (5) aus der großformatigen Platte durchgeführt wird, indem das Vereinzelungsaggregat (11) mit der großformatigen Platte (4) in Eingriff gebracht und die großformatige Platte in der ersten Richtung (Y) und/oder das Vereinzelungsaggregat (11) in der zweiten Richtung (X) bewegt werden.

9. Verfahren nach einem der vorigen Ansprüche,
**dadurch gekennzeichnet,**
**dass** wenigstens eine, bevorzugt eine Mehrzahl, nachgelagerte Bearbeitungsstationen (110, 111, 112) im Kreislauf (100) angeordnet sind und insbesondere von dem Werkstück (5) durchlaufen werden.

10. Verfahren nach einem der vorigen Ansprüche,
**dadurch gekennzeichnet,**
**dass** an der wenigstens einen nachgelagerten Bearbeitungsstation (2, 3; 110, 111, 112) wenigstens einer der folgenden Bearbeitungsgänge durchgeführt wird:
i) Aufnehmen und Ausrichten eines vereinzelten Werkstücks (5) am Ausrichtabschnitt (5a)
ii) Beschichten einer Schmalseite des plattenförmigen Werkstücks (5) mit einem Kantenstreifen,
iii) Durchführen eines Fertigschnitts, an einer noch nicht fertig formatierten Schmalseite des plattenförmigen Werkstücks (5),
iv) Einbringen von wenigstens einer Bohrung in das plattenförmige Werkstück (5),
v) Fertigbearbeiten des mit einem Kantenstreifen versehenen Werkstücks.

11. Verfahren nach einem der vorigen Ansprüche,
**dadurch gekennzeichnet,**
**dass** als wenigstens eine nachgelagerte Bearbeitungsstation (2, 3; 110, 111, 112) ein Bearbeitungszentrum und/oder eine Durchlaufmaschine und/oder eine Bohrmaschine und/oder Portal eingesetzt wird.

12. Verfahren nach einem der vorigen Ansprüche, sofern von Anspruch 2 abhängig,
**dadurch gekennzeichnet,**
**dass** in Schritt b. im Bereich der Fertigschnitte (5b) entstehender Verschnitt vor oder während des Schritts c. ausgesondert wird.

13. Verfahren nach einem der vorigen Ansprüche,
**dadurch gekennzeichnet,**
**dass** der Ausrichtabschnitt (5a) eines in Schritt b. vereinzelten plattenförmigen Werkstücks (5) zum Ausrichten des betreffenden Werkstücks (5) im weiteren Bearbeitungsprozess eingesetzt wird.

14. Verfahren nach einem der vorigen Ansprüche,
**dadurch gekennzeichnet,**
**dass** der Ausrichtabschnitt (5a) in der wenigstens einen nachgelagerten Bearbeitungsstation (2, 3, 110, 111, 112), insbesondere im letzten Bearbeitungsschritt, entfernt wird.

## Claims

1. Method for processing plate-shaped workpieces (4, 5), in particular of wood or wood substitutes, in which the following steps are carried out:
a. Providing a large-format plate (4), in particular of wood or wood substitutes, and supplying (P1) the large-format plate to a singulating station (1),
b. singulating plate-shaped workpieces (5) by dividing up the supplied large-format plate (4) in the singulating station (1) wherein cuts are made in the large-format plate (4) by at least one singulating assembly (11),
c. supplying the thus singulated workpieces (5) to at least one downstream processing station (2, 3; 110, 111, 112) in order to finish off the plate-shaped workpiece (5),
wherein in step b. at least one part of each singulated workpiece receives from the singulating assembly (11) an alignment section (5a) for engagement by gripping elements (14, 15) and/or for introducing reference bores, wherein the alignment section (5a) is a section which protrudes beyond the subsequently obtained finished format of the separated workpiece, wherein the workpiece (5) provided with the alignment section (5a) is, after its singulation, taken over by means of a gripping element (14, 15), engagement element or grasping element which engages with form-locking engagement on the alignment section (5a), wherein the gripping element, engagement element or grasping element (15) which engages with form-locking engagement on the alignment section (5a) of the workpiece (5) runs after the take-over through a circuit (100), **characterised in that** the alignment section (5a) is removed in or after step c. by a finishing or separating cut.

2. Method according to claim 1
**characterised in that** the gripping element (14, 15), engagement element or grasping element comprises a gripper which engages on the alignment section (5a) and/or the gripping element, engagement element or grasping element has a centring or alignment element (15c,) preferably a mandrel, bolt or pin, wherein in step b. a reference bore (5c) is introduced into the alignment section (5a) into which the centring or alignment element (15c) then engages.

3. Method according to claim 1 or 2
**characterised in that** in step b. at least one finishing cut (5b) is made by the singulating assembly (11), wherein the alignment section (5a) is provided on a part of the respective singulated workpiece which is free of a finishing cut.

4. Method according to one of the preceding claims
**characterised in that** the singulating assembly (11) is configured in addition to singulating the workpiece to also provide here additional finishing steps, in particular folds, grooves, bores and/or recesses into the workpiece.

5. Method according to one of the preceding claims
**characterised in that** the at least one singulating assembly (11) comprises at least one milling unit and/or one sawing unit.

6. Method according to one of the preceding claims,
**characterised in that** the singulating station (1) comprises a machining table (12) wherein the singulating assembly (11) is mounted thereon for displacement in a first direction (X, Y), in particular on a portal (10).

7. Method according to claim 5 or 6
**characterised in that** the at least one singulating assembly (11) is displaceable in a second direction (X) running in particular perpendicularly to the first direction (Y).

8. Method according to claim 5, 6 or 7
**characterised in that** the removal of a plate-shaped workpiece (5) from the large-format plate is carried out by bringing the singulating assembly (11) into engagement with the large-format plate (4), and moving the large-format plate in the first direction (Y) and/or the singulating assembly (11) in the second direction (X).

9. Method according to one of the preceding claims
**characterised in that** at least one, preferably a plurality of, downstream machining stations (110, 111, 112) are arranged in the circuit (100) and are traversed in particular by the workpiece (5).

10. Method according to one of the preceding claims
**characterised in that** at least one of the following machining processes is carried out at the at least one downstream machining station (2, 3; 110, 111, 112):
i) receiving and aligning a singulated workpiece (5) on the alignment section (5a)
ii) coating a narrow side of the plate-shaped workpiece (5) with an edging strip,
iii) carrying out a finishing cut on a not yet finished formatted narrow side of the plate-shaped workpiece (5),
iv) introducing at least one bore into the plate-shaped workpiece (5),
v) finishing machining the workpiece provided with an edging strip.

11. Method according to one of the preceding claims
**characterised in that** a machining centre and/or a throughfeed machine and/or a drilling machine and/or a portal is used as at least one downstream machining station (2, 3; 110, 111, 112).

12. Method according to one of the preceding claims when dependent on claim 2,
**characterised in that** offcuts arising in step b. in the region of the finishing cuts (5b) are removed before or during step c.

13. Method according to one of the preceding claims
**characterised in that** the alignment section (5a) of a plate-shaped workpiece (5) singulated in step b. is used for aligning the relevant workpiece (5) in the further machining process.

14. Method according to one of the preceding claims
**characterised in that** the alignment section (5a) is removed in the at least one downstream machining station (2, 3, 110, 111, 112), in particular in the last machining step.

## Revendications

1. Procédé de traitement de pièces en forme de plaque (4, 5), surtout en bois ou en matériaux de substitution du bois, dans lequel les étapes suivantes sont réalisés:
a. fournir une plaque (4) de grande taille, surtout en bois ou en matériaux de substitution du bois, et alimenter (P1) la plaque (4) de grande taille à un poste de séparation (1),
b. séparer des pièces en forme de plaque (5) par division de la plaque (4) de grande taille fourni dans le poste de séparation (1) en effectuant là-bas des coupes dans la plaque (4) de grande taille au moyen d'au moins une unité de séparation (11),
c. alimenter des pièces (5) ainsi séparées vers au moins une station de traitement (2; 3; 110, 111, 112) en aval pour achever la pièce en forme de plaque (5),
dans lequel, en étape b., au moins une partie de chaque pièce séparée reçoit de l'unité de séparation (11) une section d'alignement (5a) pour l'engagement des éléments de préhension (14, 15) et/ou pour l'insertion des alésages de référence, dans lequel la section d'alignement (5a) est une section dépassant le format final de la pièce séparée à réaliser ultérieurement, dans lequel la pièce (5) pourvue de la section d'alignement (5a) est prise en charge, après sa séparation, au moyen d'un élément de préhension (14, 15), d'un élément d'engagement ou d'un élément de saisie appliquant à engagement positif sur la section d'alignement (5a), dans lequel
l'élément de préhension, l'élément d'engagement ou l'élément de saisie (15) appliquant à engagement positif sur la section d'alignement (5a) de la pièce (5), après le transfert suit un cycle (100),
**caractérisé en ce**
**que** la section d'alignement (5a) est enlevée dans ou après l'étape c. par une coupe finale ou une coupe de séparation.

2. Procédé selon la revendication 1,
**caractérisé en ce**
**que** l'élément de préhension (14, 15), l'élément d'engagement ou l'élément de saisie comporte une pince qui est appliquée à la section d'alignement (5a), et/ou que l'élément de préhension, l'élément d'engagement ou l'élément de saisie comporte un élément de centrage ou d'alignement (15c), de préférence un mandrin, un boulon ou un goupille, dans lequel, dans l'étape b., un alésage de référence (5c) est introduit dans la section d'alignement (5a) dans lequel ensuite l'élément de centrage ou d'alignement (15c) s'engage.

3. Procédé selon la revendication 1 ou 2,
**caractérisé en ce**
**qu'**en étape b., au moins une coupe finale (5b) est réalisée par l'unité de séparation (11), dans lequel la section d'alignement (5a) est prévue sur une partie ne comportant pas une coupe finale (5b) de la pièce respective séparée.

4. Procédé selon l'une quelconque des revendications précédentes,
**caractérisé en ce**
**que** l'unité de séparation (11) est conçue, outre la séparation de la pièce, pour introduire sur la pièce des étapes de traitement supplémentaires, surtout des pliages, des rainures, des alésages ou / et des évidements.

5. Procédé selon l'une quelconque des revendications précédentes,
**caractérisé en ce**
**que** l'au moins une unité de séparation (11) comporte au moins une unité de fraisage et / ou une unité de sciage.

6. Procédé selon l'une quelconque des revendications précédentes,
**caractérisé en ce**
**que** le poste de séparation (1) comporte une table de traitement (12), dans lequel l'unité de séparation (11) est montée de manière coulissante à cette table dans une première direction (X, Y), surtout à un portique.

7. Procédé selon la revendication 5 ou 6,
**caractérisé en ce**
**que** l'au moins une unité de séparation (11) est coulissante dans une seconde direction (X) s'étendant de manière verticale surtout à la première direction (Y).

8. Procédé selon la revendication 5, 6 ou 7,
**caractérisé en ce**
**que** la séparation d'une pièce en forme de plaque (5) à partir de la plaque de grande taille est effectuée en mettant l'unité de séparation (11) en prise avec la plaque (4) de grande taille et la plaque de grande taille est déplacée dans la première direction (Y) et / ou l'unité de séparation (11) est déplacée dans la seconde direction (X).

9. Procédé selon l'une quelconque des revendications précédentes,
**caractérisé en ce**
**que** l'au moins une, de préférence une pluralité, de stations de traitement (110, 111, 112) en aval sont agencées dans un circuit (100) et sont surtout traversées par la pièce (5).

10. Procédé selon l'une quelconque des revendications précédentes,
**caractérisé en ce**
**que**, sur l'au moins une station de traitement (2, 3; 110, 111, 112) en aval au moins une des opérations de traitement suivantes est effectuée:
i) prendre en charge et aligner une pièce (5) séparée à la section d'alignement (5a)
ii) revêtir un petit côté de la pièce en forme de plaque (5) avec une bordure,
iii) effectuer une coupe finale sur un petit côté de la pièce en forme de plaque (5) dont le format n'est pas encore terminé,
iv) insérer au moins un alésage dans la pièce en forme de plaque (5),
v) finir la pièce pourvue d'une bordure.

11. Procédé selon l'une quelconque des revendications précédentes,
**caractérisé en ce**
**qu'**un centre de traitement et / ou une machine en continu et / ou une perceuse et / ou un portique est utilisé en tant que station de traitement (2, 3; 110, 111, 112) en aval.

12. Procédé selon l'une quelconque des revendications précédentes, pour autant que dépendant de la revendication 2,
**caractérisé en ce**
**que**, dans l'étape b, des rognures se produisant dans la zone des coupes finales (5b) sont éliminées avant ou pendant l'étape c.

13. Procédé selon l'une quelconque des revendications précédentes,
**caractérisé en ce**
**que** la section d'alignement (5a) d'une pièce en forme de plaque (5) séparée dans l'étape b. est utilisée pour aligner la pièce (5) respective dans la suite du procédé de traitement.

14. Procédé selon l'une quelconque des revendications précédentes,
**caractérisé en ce**
**que** la section d'alignement (5a) est éliminée dans l'au moins une station de traitement (2, 3, 110, 111, 112) en aval, surtout dans la dernière étape de traitement.
